# EUROPEAN PATENT SPECIFICATION

(11) **EP 1 657 150 B1**
(45) Date of publication and mention of the grant of the patent: **25.01.2012**
(21) Application number: 04771217.9
(22) Date of filing: 04.08.2004
(51) Int. Cl.: B62J 15/00, B62J 23/00

(54) **MOTORCYCLE**
MOTORRAD
MOTO

(30) Priority: 19.08.2003 JP 2003294974
(43) Date of publication of application: 17.05.2006
(73) Proprietor: Yamaha Hatsudoki Kabushiki Kaisha, Iwata-shi, Shizuoka 438-8501 (JP)
(72) Inventor: MIYAMOTO, Masatoshi, Shizuoka 4388501 (JP)
(74) Representative: Grünecker, Kinkeldey, Stockmair & Schwanhäusser
(86) International application number: PCT/JP2004/011182
(87) International publication number: WO 2005/016733

(56) References cited:
- EP-A- 1 201 533
- JP-A- 3 204 384
- JP-A- 7 257 459
- JP-A- 8 067 280
- JP-A- 8 091 267
- JP-A- 58 199 278
- JP-U- 59 113 283
- JP-U- 60 105 582

## Description

### Technical Field

The present invention relates to a motorcycle comprising a front fender.

### Background Art

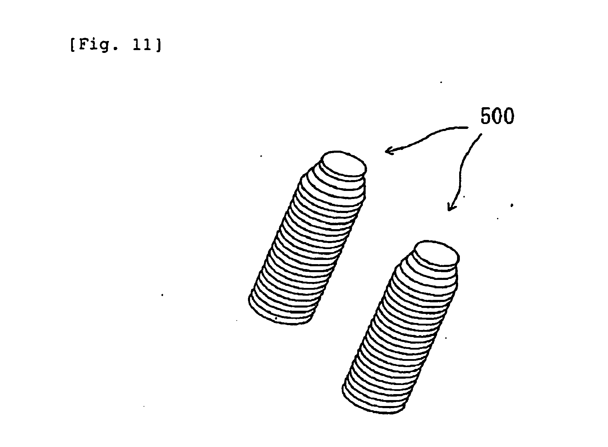

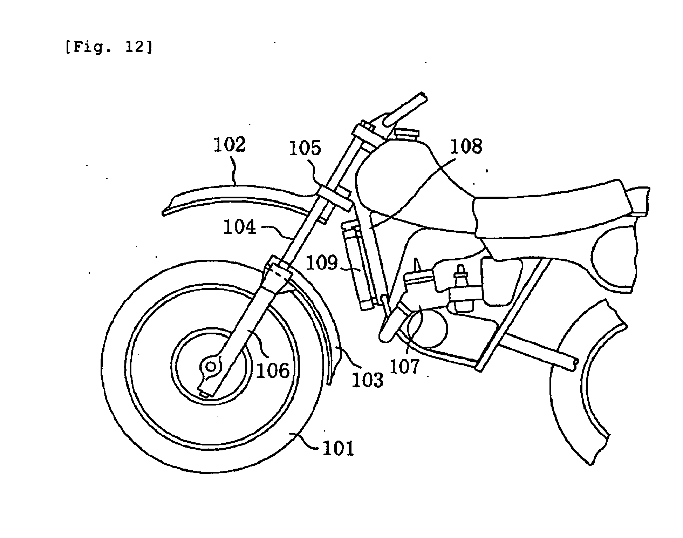

Off road motorcycles mount, in many cases, a fork boot (a bellows type rubber boot) having a shape shown in Fig. 11 in order to protect an inner tube of a front fork. On the other hand, as shown in Fig. 12, from the viewpoint of heightening ventilation for a radiator 109 mounted on a front portion of a vehicle body 108 and an engine 107, a front fender is divided into front and rear splash boards (102, 103), the front splash board 102 is arranged in a high location and fixed to a stationary bracket 105, to which an inner tube 104 of a front fork (104, 106) is fixed, and the rear splash board 103 is arranged just close to a front wheel 101 and fixed to an outer tube 106 (see, for example, Patent Document 1).

In case of using the front fender shown in Fig. 12, it can assuredly ensure ventilation but cannot prevent damage to the inner tube by flying pebbles, or the like. Accordingly, it is considered that it becomes necessary in the construction shown in Fig. 12 to mount a fork boot 500, shown in Fig. 11, on the inner tube 104.
Patent Document 1: JP-UM-B-62-27507

### Disclosure of the Invention

### Problems that the Invention is to Solve

As described above, the fork boot 500 is commonly mounted to the inner tube 104, but such arrangement is common to thereby make improvement difficult, and such prerequisite for mounting of the fork boot 500 imposes a limitation on planning or design of off road motorcycles. The inventors of the present application have attempted to develop a resin fork protector in place of the fork boot 500 but could not prevent damage to the inner tube 104 with certainty and finish the fork protector.

However, when a fork protector capable of surely preventing damage to the inner tube 104 can be developed, freedom in designing a resin fork protector is considerably great unlike the fork boot 500 made of rubber and therefore it is possible to readily manufacture a protector, which is designed to have a favorable outward appearance, and a protector having a further rational shape in terms of design for motorcycles.

The document EP 1 201 533 A2 discloses a front fender to cover a front wheel of a bicycle. The front fender comprises a front-side fender configured to cover a front side of the front wheel of the bicycle, and a rear-side fender configured to cover a rear side of the front wheel.

The document JP 59-113283 U according to the preamble of claim 1 discloses a motorcycle comprising a front fender to cover a front wheel. The front fender comprises a front-side fender and a rear-side fender mounted in a position lower than that of the front-side fender.

The document JP 60-105582 U discloses a front fender to cover a front wheel of a motorcycle. The front fender comprises a front-side fender and a rear-side fender mounted in a position lower than that of the front-side fender.

The document JP 07-257459 A discloses a motorcycle comprising a fork protector configured to cover a front surface of a front fork and to expose a rear surface of the front fork. A front fender is configured to cover a front wheel of the motorcycle.

The document JP 08-091267 A discloses a motorcycle comprising a fork protector made of a synthetic resin for protecting a front fork of the motorcycle.

The document JP 08-067280 A discloses a fork protector for a motorcycle protecting a front fork of the motorcycle.

It is an object of the present invention to provide a motorcycle comprising a front fender capable of preventing damage to an inner tube while ensuring ventilation and being large in freedom for design.

### Means for Solving the Problems

This object is solved by the features of claim 1.

Further improvements are laid down in the subclaims.

The invention provides a motorcycle comprising a front fender covering a front wheel, and comprising a front-side fender that covers a front side of the front wheel, a rear-side fender that covers a rear side of the front wheel, and a fork protector that covers a front surface of a front fork that holds the front wheel, and wherein the rear-side fender is mounted in a position lower than that of the front-side fender, and the fork protector exposes a rear surface of the front fork.

The front fork comprises outer tubes holding the front wheel, and inner tubes accommodated in the outer tubes, wherein the fork protector covers a front surface of the inner tubes.

The front-side fender is mounted to the inner tubes, and the rear-side fender is mounted to the outer tubes, wherein the front-side fender is fixed to the fork protector.

Preferably, a radiator of the motorcycle is positioned behind a rear surface of the inner tubes.

In a preferred embodiment, a region of the front fork covered by the fork protector and a region of the front fork covered by the rear-side fender overlap each other as viewed from laterally of the motorcycle.

The fork protector engages slidably with the rear-side fender.

Preferably, the rear-side fender is provided with protector guides, which engage with a part of the fork protector.

In the embodiment of the invention, the protector guides comprise main guides that restrict movements in a vehicle longitudinal direction, left and right movements laterally to the vehicle longitudinal direction of the fork protector, and sub-guides that restrict : inward and rearward movements in a vehicle longitudinal direction of the fork protector.

Preferably, the motorcycle is an off road type motorcycle.

The front fender for motorcycles, according to an embodiment, is a front fender for motorcycles, which is supported by a front forks of an erect type, comprising left and right inner tubes fixed to a steering shaft supported by a head pipe and outer tubes mounted to lower portions of the inner tubes and covers an upper side of a front wheel, the front fender being divided into two parts, that is, a front-side fender and a rear-side fender, the front-side fender being fixed to a stationary bracket, to which the inner tubes are fixed, the rear-side fender being mounted to the outer tubes, a fork protector being arranged to cover front sides of the inner tubes, an upper portion of the fork protector being fixed to move vertically together with the front-side fender, a front edge of the rear-side fender extending forward to overlap the fork protector as viewed from a side of the vehicle.

An embodiment has a feature in that a protector guide is provided to engage slidably with the fork protector to restrict deflection of the fork protector.

An embodiment has a feature in that the protector guide is supported on and fixed to the rear-side fender.

An embodiment has a feature in that the protector guide comprises a main guide that restricts longitudinal, left and right movements of the fork protector, and a sub-guide that restricts left, right and rearward movements of the fork protector, the main guide engages with the fork protector over a whole stroke of the front forks, and a length, over which the sub-guide engages with the fork protector, is increased as the front fork is stroked.

An embodiment has a feature in that the rear-side fender is formed to be increased in depth toward a front side thereof.

An embodiment has a feature in that a clearance between an inner peripheral surface of the rear-side fender and an outer peripheral surface of the front wheel is made larger on a rear side than on a front side.

### Advantage of the Invention

Since the motorcycle according to the invention comprises a front-side fender that covers a front side of a front wheel, a rear-side fender that covers a rear side of the front wheel, and a fork protector that covers a front surface of a front fork, the fork protector can protect a front surface of the front fork and the rear-side fender can protect a rear surface of the front fork. Also, since the rear-side fender is mounted in a position lower than that of the front-side fender and the fork protector exposes a rear surface of the front fork, it is possible to ensure ventilation. Further, any fork boot is not used but a fork protector is used, it becomes possible to make the front fender large in freedom for design.

### Brief Description of the Drawings

[Fig. 1] Fig. 1 is a side view showing an essential part of a motorcycle provided with a front fender 15 according to an embodiment of the invention.
[Fig. 2] Fig. 2 is an exploded, perspective view showing the front fender 15 .
[Fig. 3] Fig. 3 is a side view showing a portion, to which a front-side fender 16 is mounted.
[Fig. 4] Fig. 4 is a plan view showing the front-side fender 16.
[Fig. 5] Fig. 5 is a cross sectional view showing a portion, to which the front-side fender 16 is mounted.
[Fig. 6] Fig. 6 is a side view showing a portion, to which a rear-side fender 17 is mounted.
[Fig. 7] Fig. 7 is a plan view showing the portion, to which the rear-side fender 17 is mounted.
[Fig. 8] Fig. 8 is a cross sectional view showing the portion, to which the rear-side fender 17 is mounted.
[Fig. 9] Fig. 9 is a cross sectional view taken along the line IX-IX in Fig. 6.
[Fig. 10] Fig. 10 is a cross sectional view taken along the line X-X in Fig. 6.
[Fig. 11] Fig. 11 is a perspective view showing the structure of a fork boot 500.
[Fig. 12] Fig. 12 is a side view showing an essential part of a motorcycle provided with a conventional front fender.

### Description of Reference Numerals and Signs

1: motorcycle
2: vehicle body frame
3: head pipe
4: steering shaft
5: upper bracket
5a: upper stay
6: under bracket
6a: under stay
7: handle (steering handle)
8: front fork
9: front wheel
9a: axle
10: inner tube
11: outer tube
11a: front boss
11a': projection
11b: rear boss
12: radiator
15: front fender
16: front-side fender
16a: front fender portion
16b: upper wall
16c: right wall
16d: left wall
16d: mount
17: rear-side fender
17a: rear fender portion
17b: left and right side walls
17c: recess
17d: extension
17e: main guide
17f: sub-guide
17f': lower end
17h: stationary flange
20: fork protector
20a: protector portion (fender portion)
20b: fixed portion
20c: left and right cover portions
20d: upper end boss
20e: inner wall
20g: protector portion (engagement portion)
21, 22, 23, 25, 26, 30: bolt
32: protector guide
34: brake hose
34': intermediate portion
35: clamp member
101: front wheel
102: front splash board
103: rear splash board
104: inner tube
105: stationary bracket
106: outer tube
107: engine
108: vehicle body
109: radiator
500: fork boot

### Best Mode for Carrying Out the Invention

Embodiments of the invention will be described below with reference to the drawings. In the following drawings, for the sake of simplifying an explanation, the same reference numerals denote constituent elements having substantially the same function. In addition, the invention is not limited to the following embodiments.

### (First embodiment)

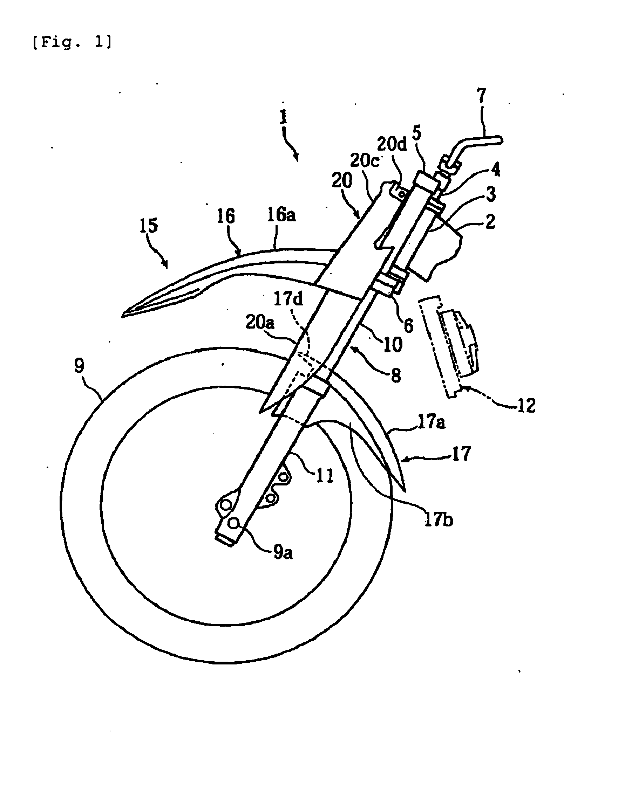

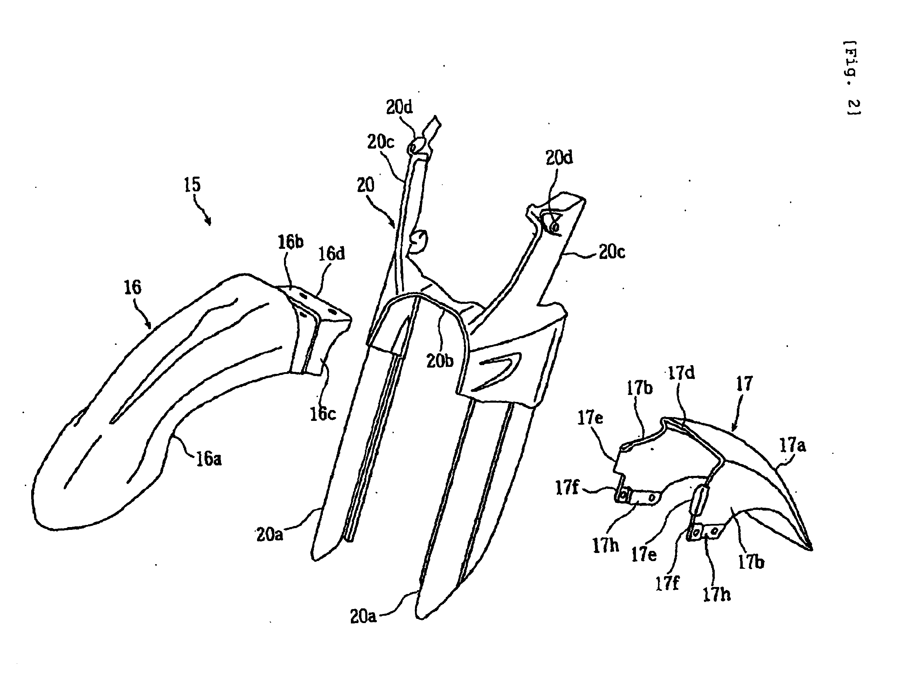

A front fender 15 will be described with reference to Figs. 1 and 2. Fig. 1 is a side view showing an essential part of a motorcycle provided with the front fender 15 according to the embodiment, and Fig. 2 is an exploded, perspective view showing the front fender 15.

The front fender 15 according to the embodiment is one that covers a front wheel 9 of a motorcycle 1. As shown in Fig. 1, the front fender 15 comprises a front-side fender 16 covering a front side of the front wheel 9, a rear-side fender 17 covering a rear side of the front wheel 9, and a fork protector 20 covering a front surface of a front fork 8 that holds the front wheel 9. The rear-side fender 17 is mounted in a position lower than the front-side fender 16, and the fork protector 20 exposes a rear surface of the front fork 8.

The front fork 8 comprises an outer tube 11 holding the front wheel 9, and an inner tube 10 accommodated in the outer tube 11, and the fork protector 20 covers a front surface of the inner tube 10. In addition, a radiator 12 is positioned behind a rear surface of the inner tube 10.
According to the embodiment, the front-side fender 16 is mounted to the inner tube 10 while the rear-side fender 17 is mounted to the outer tube 11. Also, the front-side fender 16 is fixed to the fork protector 20. In an example shown in Fig. 1, a region covered by the fork protector 20 and a region covered by the rear-side fender 17 overlap each other as viewed from laterally of the motorcycle 1 (see the reference numeral "17d" in Fig. 1).

Also, while described later in detail, the fork protector 20 engages slidably with the rear-side fender 17. The rear-side fender 17 is provided, as shown in Fig. 2, with protector guides (17e, 17f), which engage with a part of the fork protector 20. The protector guides comprise main guides 17e that restrict longitudinal, left and right movements of the fork protector 20, and sub-guides 17f that restrict inward and rearward movements of the fork protector 20.

Since the front fender 15 according to the embodiment comprises the front-side fender 16, the rear-side fender 17, and the fork protector 20, the front surface of the front fork 8 can be protected by the fork protector 20 and the rear surface of the front fork 8 can be protected by the rear-side fender 17. That is, the fork protector 20 protects the front surface of the front fork 8 to thereby prevent the front surface of the inner tube 10 from being damaged by flying pebbles, or the like, and further protection by the rear-side fender 17 prevents the rear surface of the inner tube 10 from being damaged by flying pebbles, or the like. Here, when a region covered by the fork protector 20 and a region covered by the rear-side fender 17 overlap each other as shown in Fig. 1, protection can be made further perfect.

Also, since the rear-side fender 17 is mounted in a position lower than the front-side fender 16 and the fork protector 20 exposes the rear surface of the front fork 8, it is possible to ensure ventilation. That is, when the rear-side fender 17 were mounted in the same level as that of the front-side fender 16, the rear-side fender 17 would block the front of the radiator 12, so that ventilation would be worsened. Also, when the fork protector 20 blocked not only the front surface of the front fork 8 but also the rear surface thereof, it would also block the front of the radiator 12, so that ventilation would be obstructed. Hereupon, in the construction according to the embodiment, the rear-side fender 17 is made low and the fork protector 20 exposes the rear surface of the front fork 8 so as not to obstruct ventilation.

Further, in the construction according to the embodiment, the fork protector 20 is used to protect the inner tube 10 without the use of the fork boot (a bellows type rubber boot) 500 shown in Fig. 11, so that it becomes possible to make the front fender 15 large in freedom for design. That is, since the fork protector 20 is formed from, for example, a resin, its relatively complex shape is easily worked, thus enabling providing an outward appearance and a shape, which are excellent in design quality. Also, in the case where a further rational shape in terms of design for motorcycles is developed for race and ordinary traveling, a fork protector can be readily worked to such shape and mass-produced. Also, a fork protector can be readily improved to be conformed to a fashionable shape.

By mounting the front-side fender 16 to the inner tube 10 and mounting the rear-side fender 17 to the outer tube 11, positions (a distance) of the front-side fender 16 and a handle 7 can be substantially fixed and positions (a distance) of the rear-side fender 17 and the front wheel 9 can be substantially fixed.

Besides, since the fork protector 20 engages slidably with the rear-side fender 17, it is possible to restrict deflection of the fork protector 20 with the result that it is possible to prevent damage due to deflection of the fork protector 20 during traveling. Also, since the protector guides (17e, 17f), which engage with a part of the fork protector 20, are provided on the rear-side fender 17, a lower portion of the fork protector 20, of which deflection is liable to occur, can be supported by the rear-side fender 17, so that it is possible to surely prevent damage due to deflection and to prevent an increase in the number of parts as compared with the case of being supported by a separate part. Further, since the protector guides comprise the main guides 17e that restrict longitudinal, left and right movements of the fork protector 20, and the sub-guides 17f that restrict inward and rearward movements of the fork protector 20, the sub-guides 17f together with the main guides 17e engage as the front fork 8 is stroked, so that it is possible to further surely prevent deflection of the fork protector 20 over the whole stroke.

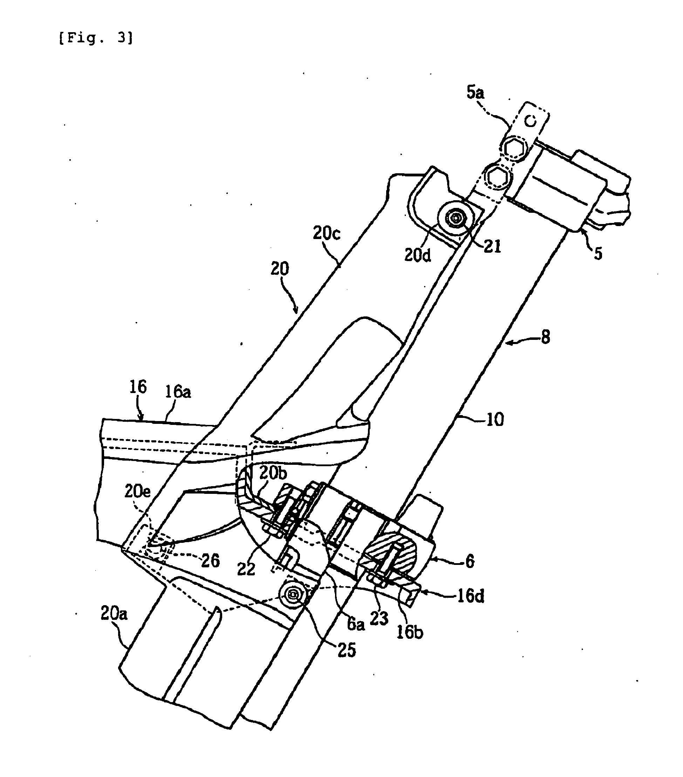

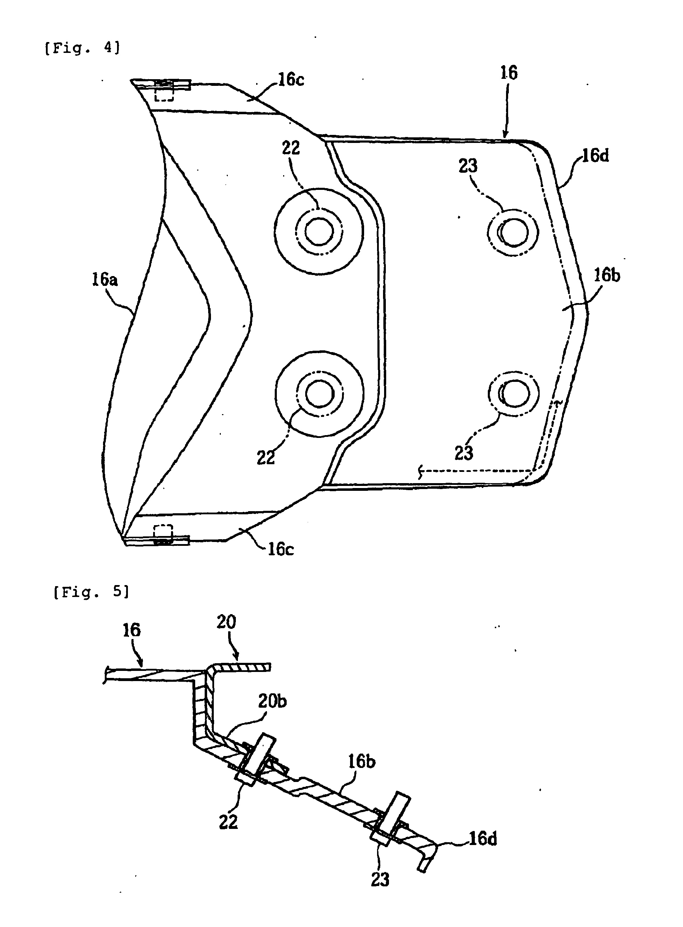

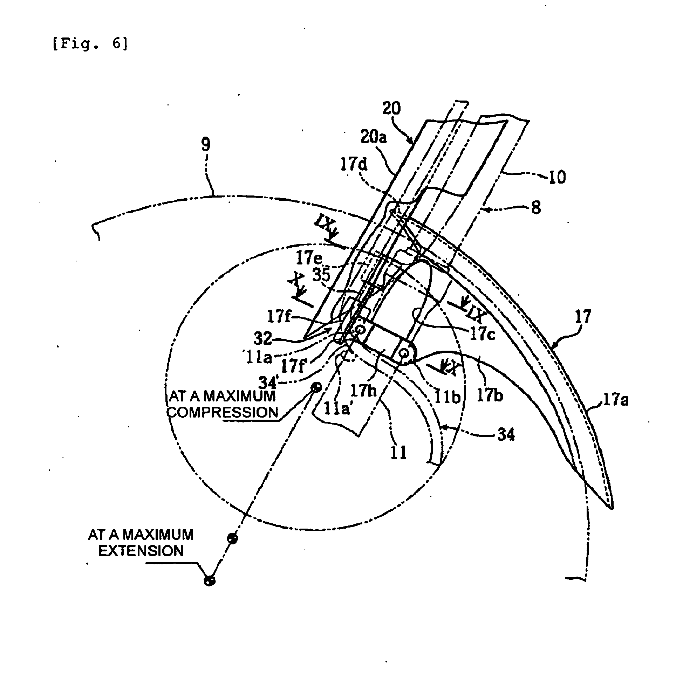

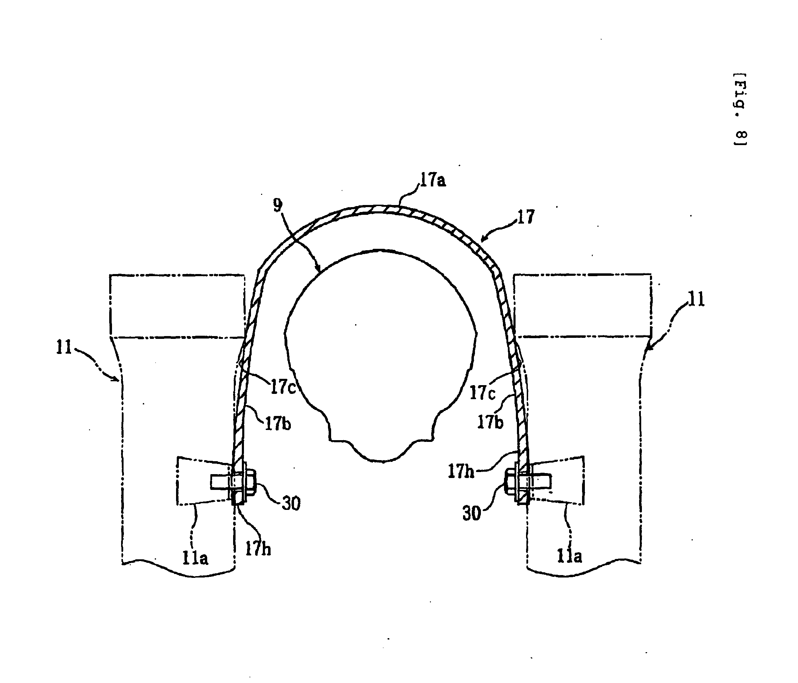

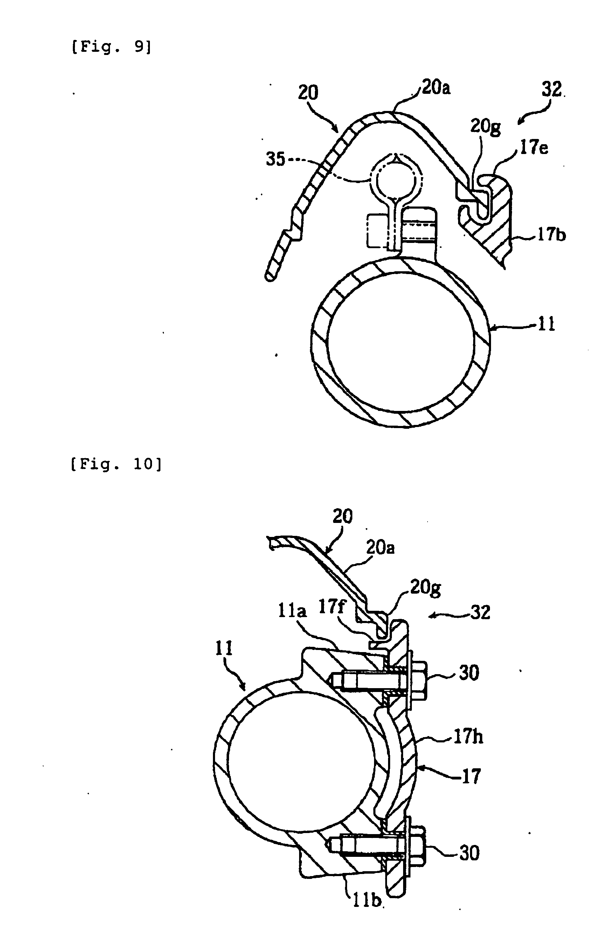

The construction of the embodiment will be described below in more detail with reference to Figs. 3 to 10 in addition to Figs. 1 and 2. Fig. 3 is a side view showing a portion, to which the front-side fender 16 is mounted, Fig. 4 is a plan view showing the front-side fender 16, and Fig. 5 is a cross sectional view showing the portion, to which the front-side fender 16 is mounted. Figs. 6, 7, and 8, respectively, are a side view, a plan view, and a cross sectional view showing a portion, to which the rear-side fender 17 is mounted. Fig. 9 is a cross sectional view taken along the line IX-IX in Fig. 6, and Fig. 10 is a cross sectional view taken along the line X-X in Fig. 6.

For the motorcycle 1 shown in Fig. 1, a front vehicle body of an off road type motorcycle is shown and constructed such that a head pipe 3 fixed to a front end of a vehicle body frame 2 supports a pair of left and right front forks 8, 8 to enable turning the same left and right.

A steering shaft 4 is supported by the head pipe 3 through a bearing (not shown) to be able to turn, and an upper bracket 5 and an under bracket 6, respectively, are fixed to upper and lower ends of the steering shaft 4. Further, a steering handle 7 is bolted and fixed to the upper bracket 5. Also, a radiator 12 is arranged rearwardly and downwardly of the head pipe 3 to cool a cooling water supplied to an engine (not shown).

The left and right front forks 8, 8 are fixed, in a state of being inclined rearward, to the upper and under brackets 5, 6. Also, an axle 9a of the front wheel 9 is journaled between lower ends of the left and right front forks 8.

The front forks 8 are of an erect type, in which the inner tube 10 is inserted into the outer tube 11 arranged therebelow to be relatively movable, and the respective inner tubes 10 are bolted and fixed to the upper and under brackets 5, 6.

Also, the front fender 15 covering an upper side of the front wheel 9 is arranged between the left and right front forks 8, 8. The front fender 15 is formed from a resin, and divided into the front-side fender 16 and the rear-side fender 17. The front-side fender 16 is mounted to the under bracket 6, to which the inner tubes 10 are fixed, and the rear-side fender 17 is mounted to upper ends of the outer tubes 11. A traveling wind is introduced into the radiator 12 through a gap formed between the front-side and rear-side fenders 16, 17. Also, the fork protector 20, which is formed from a resin and covers the front side of the left and right inner tubes 10, is arranged on the front forks 8.

As shown in Fig. 2, the front-side fender 16 comprises a substantially beak-shaped front fender portion 16a covering the upper portion of the front wheel 9, an upper wall 16b formed integral with a rear end of the front fender portion 16a, and a mount 16d having left and right side walls 16c, 16c. Also, the front-side fender 16 is formed to be gradually decreased in wall thickness toward the front.

The rear-side fender 17 comprises an arcuate-shaped rear fender portion 17a covering a rear portion of an upper edge of the front wheel 9, and left and right side walls 17b, 17b formed integral with left and right edges of the rear fender portion 17a.

The fork protector 20 comprises left and right protector portions 20a, 20a having a substantially semi-circular shape to surround the front side of the inner tubes 10, a fixed portion 20b formed integrally in a manner to connect upper ends of the left and right protector portions 20a, and left and right cover portions 20c, 20c extending upward from left and right sides of the fixed portion 20b.

As shown in Figs. 3 to 5, the mount 16d of the front-side fender 16 is surrounded by the left and right protector portions 20a and the fixed portion 20b to be hidden inside. Also, lower portions of the left and right protector portions 20a extend to the upper ends of the outer tubes 11 in a most extended position.

Also, as shown in Fig. 6, a brake hose 34 is laid in the left protector portion 20a in a manner to extend along the left front fork 8. The brake hose 34 has its lower end connected to a caliper (not shown) fixed to a lower end of the outer tube 11 and has its upper end connected to a master cylinder (not shown) fixed to the steering handle 7.

The brake hose 34 is fixedly supported by a clamp member 35, which is bolted and fixed to the outer tube 11, and clamp members (not shown) fixed to the under bracket 6 and the upper bracket 5.

The brake hose 34 bends as the front wheel 9 is stroked, and in order to avoid a situation, in which such bending brings an intermediate portion 34' of the brake hose 34 into contact with the protector portion 20a, there is adopted a construction, in which the intermediate portion 34' is interposed by a lower end 17f' of the rear-side fender 17 and a portion of the outer tube 11 between a boss 11a and a projection 11a'. Thereby, a situation, in which the intermediate portion 34' of the brake hose 34 bends forward to contact with the protector portion 20a, is avoided.

As shown in Figs. 2 and 3, the left and right cover portions 20c are formed in a manner to surround a headlight (not shown), and upper end bosses 20d of the respective cover portions 20c together with the headlight are clamped and fixed to an upper stay 5a of the upper bracket 5 with grommets (not shown) therebetween, by bolts 21.

As shown in Figs. 3 to 5, the fixed portion 20b of the fork protector 20 is formed so as to extend substantially along the upper wall 16b of the front-side fender 16, the fixed portion together with a front portion of the upper wall 16b being clamped and fixed to an underside of a front portion of the under bracket 6 by left and right bolts 22, 22, which are threadedly inserted from under. Also, a rear end of the upper wall 16b is clamped and fixed to an underside of a rear portion of the under bracket 6 by left and right bolts 23, 23, which are threadedly inserted from under.

As shown in Fig. 3, left and right sides of the fixed portion 20b are clamped and fixed to an under stay 6a of the under bracket 6 by a bolt 25, which is mounted from outside. Also, the left and right sides of the fixed portion 20b are formed with inner walls 20e of double wall structure, and the left and right side walls 16c of the front-side fender 16 are clamped and fixed to the inner walls 20e by bolts 26. Thereby, the fork protector 20 is fixed to the under bracket 6 so as to move vertically together with the front-side fender 16.

As shown in Fig. 6, the rear fender portion 17a of the rear-side fender 17 is set to have the same wall thickness over a total length thereof, and the left and right side walls 17b, 17b are formed in a manner to be increased in vertical dimension from the rear toward the front. Thereby, the rear-side fender 17 is formed to be increased in depth toward the front. The left and right side walls 17b are inserted so as to be positioned between the left and right outer tubes 11, and relief recesses 17c, 17c are formed on the respective side walls 17b to avoid interference with the outer tubes 11. Also, stationary flanges 17h are formed on lower edges of the left and right side walls 17b.

As shown in Figs. 6 to 8 and 10, the front and rear bosses 11a, 11b are formed on the left and right outer tubes 11 to be expanded therefrom, and the stationary flanges 17h of the left and right side walls 17b, 17b are clamped and fixed to the front and rear bosses 11a, 11b by a pair of bolts 30, 30, which are threadedly inserted from inside.

Also, as shown in Fig. 6, a clearance between an inner peripheral surface of the rear fender portion 17a and an outer peripheral surface of the front wheel 9 is set such that a rear side thereof is larger than a front side thereof, and specifically, a clearance on the front side is set to about 15 mm while a clearance on the rear side is set to about 22 mm.

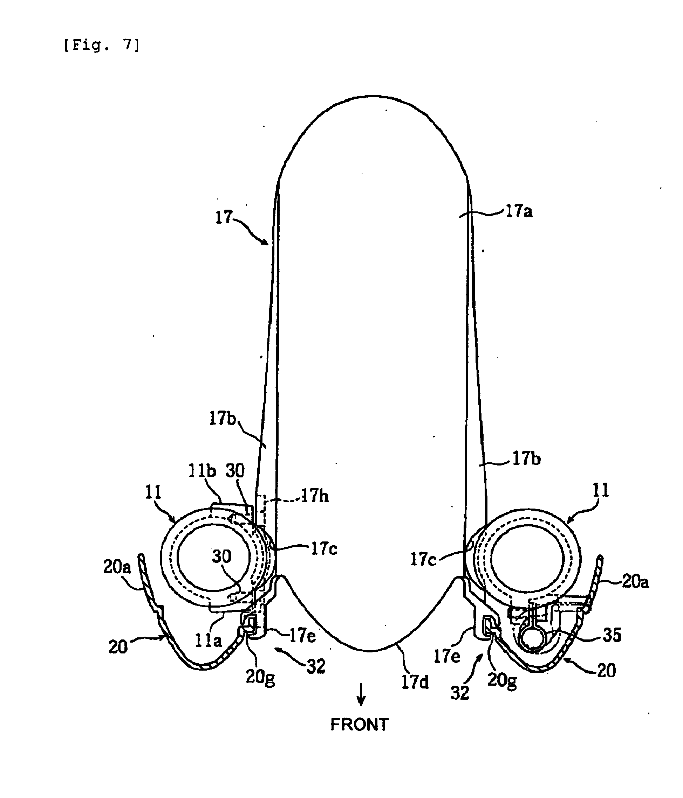

As shown in Figs. 6 and 7, a canopy-shaped extension 17d is formed on a front edge of the rear fender portion 17a, the extension 17d being positioned on the vehicle front side of the inner tubes 10 as viewed from laterally of the vehicle and projecting to overlap the protector portions 20a of the fork protector 20.

Also, as shown in Figs. 6, 7, 9, and 10, protector guides 32 are provided on front edges of the left and right side walls 17b of the rear-side fender 17 to engage slidably with the left and right protector portions 20a to restrict deflection of the protector portions 20a. The protector guides 32 comprise the main guides 17e formed integrally on upper ends of the front edges of the left and right side walls 17b, the sub-guides 17f formed integrally contiguous to the main guides 17e to extend downward, and engagement portions 20g formed integrally on inner edges of the left and right protector portions 20a and bendingly formed to be able to engage with the main guides 17e and the sub-guides 17f.

The main guides 17e are formed to be substantially C-shaped in transverse cross section and opened outward, the engagement portions 20g slidably engage in the main guides 17e, and the main guides 17e restrict longitudinal, left and right movements of the protector portions 20a. The whole main guides 17e engage with the protector portions 20g over a whole stroke of the front forks 8.

The sub-guides 17f are formed on the left and right side walls 17b to project outward, and the engagement portions 20g slidably engage with corners of the sub-guides 17f and the side walls 17b. The sub-guides 17f restrict longitudinal, left and right movements of the protector portions 20g. Also, a length, over which the sub-guides 17f engage with the protector portions 20g, is increased as the front forks 8 are stroked.

In assembly of the front fender 15 according to the embodiment, the front-side fender 16 and the fork protector 20 are beforehand assembled together to form a subassembly. The brake hose 34 is arranged along the front fork 8 and supported and fixed by the respective clamp members 35. Subsequently, the subassembly of the front-side fender 16 and the fork protector 20 is bolted and fixed to the under bracket 6. Succeedingly, the rear-side fender 17 is mounted between the left and right outer tubes 11, 11, the engagement portions 20g of the protector portions 20a are fitted into the main guides 17e, and the rear-side fender 17 is bolted and fixed to the outer tubes 11. Thereafter, the front wheel 9 is mounted between the outer tubes 11.

According to the embodiment, the front fender 15 is divided into the front-side fender 16 and the rear-side fender 17, the front-side fender 16 is mounted and fixed to the under bracket 6 that supports the inner tubes 10, the rear-side fender 17 is mounted and fixed to the outer tubes 11, and the extension 17d is formed on a front edge of the rear-side fender 17 to overlap the fender portions 20a of the fork protector 20, so that the rear-side fender 17 arranged on the outer tubes 11 can prevent pebbles, etc. sprung up by the front wheel 9 from striking against the back surface sides of the inner tubes 10. Thereby, it becomes possible to adopt the fork protector 20 designed to a desired outward appearance and shape, thus improving the outward appearance as compared with the case where a conventional fork boot is mounted.

Also, since the extension 17d is formed on the front edge of the rear-side fender 17, hindrance is not constituted in the case where a traveling wind is introduced from between the front-side and rear-side fenders 16, 17, so that it is possible to heighten the radiator 12 in cooling capacity.

According to the embodiment, since the protector guides 32 are provided on the rear-side fender 17 to slidably engage with the protector portions 20a of the fork protector 20 to restrict deflection of the protector portions 20a, the protector portions 20a put in a free state do not deflect, thus enabling preventing damage to the protector portions 20a.

Also, since the protector guides 32 comprise the main guides 17e and the sub-guides 17f formed integrally on the rear-side fender 17, and the engagement portions 20g formed integrally on the left and right protector portions 20a, the protector portions 20a being liable to deflect can be supported by the rear-side fender 17, so that it is possible to surely prevent damage due to deflection and to prevent an increase in the number of parts as compared with the case of being supported by a separate part.

According to the embodiment, since the whole main guides 17e engage with the protector portions 20a over a whole stroke of the front forks 8, and a length, over which the sub-guides 17f engage with the protector portions 20a, is increased as the front forks 8 are stroked, the sub-guides 17f together with the main guides 17e will engage with the protector portions 20a as the front forks 8 are stroked, so that it is possible to further surely prevent deflection of the fork protector 20 over the whole stroke.

Further, according to the embodiment, since the left and right side walls 17b of the rear-side fender 17 are formed such that a vertical dimension is larger on front sides thereof than on rear sides thereof, that is, the left and right side walls are formed to be increased in depth toward front sides thereof, it is possible to heighten supporting rigidity in the case where front ends of the rear-side fender 17 are fixed to and cantilevered by the outer tubes 11, to restrict deflection at rear ends thereof, and to further surely prevent flying pebbles, etc. from being scattered toward the inner tubes 10. Also, since a clearance between the inner peripheral surface of the rear-side fender 17 and the outer peripheral surface of the front wheel 9 is made larger on a rear side than on a front side, it is possible to prevent that contact with the front wheel 9, which is caused by deflection of the rear end of the rear-side fender 17.

While the invention has been described by way of a preferred embodiment, the description is not limitative but various modifications are of course possible.

For example, an air-cooled engine can be positioned in a position of the radiator 12. Also, while an explanation has been given taking an off road type motorcycle as an example, the construction of the embodiment can be adopted in not only an off road type motorcycle but also a motorcycle, in which the effect of the invention can be obtained.

### Industrial Applicability

According to the invention, it is possible to provide a motorcycle comprising a front fender, which can prevent damage to an inner tube while ensuring ventilation and is large in freedom of design.

## Claims

1. Motorcycle comprising:
a front fender (15) configured to cover a front wheel (9) of the motorcycle (1), the front fender (15) comprising a front-side fender (16) configured to cover a front side of the front wheel (9) of the motorcycle (1), and a rear-side fender (17) configured to cover a rear side of the front wheel (9), wherein the rear-side fender (17) is mounted in a position lower than that of the front-side fender (16), and
a front fork (8), said front fork (8) comprises outer tubes (11) holding the front wheel (9), and inner tubes (10) accommodated in the outer tubes (11) and wherein the front-side fender (16) is mounted to the inner tubes (10), and the rear-side fender (17) is mounted to the outer tubes (11),
**characterized by**
a fork protector (20) configured to cover a front surface of the front fork (8) and to expose a rear surface of the front fork (8), wherein the fork protector (20) is configured to cover a front surface of the inner tubes (10),
wherein the front-side fender (16) is fixed to the fork protector (20), and
wherein the fork protector (20) engages slidably with the rear-side fender (17).

2. Motorcycle according to claim 1, wherein a region of the front fork (8) covered by the fork protector (20) and a region of the front fork (8) covered by the rear-side fender (17) overlap each other as viewed from laterally of the motorcycle (1).

3. Motorcycle according to claim 1 or 2, wherein the rear-side fender (17) is provided with protector guides (17e,17f), which engage with a part of the fork protector (20).

4. Motorcycle according to claim 3, wherein the protector guides comprise main guides (17e) adapted to restrict longitudinal movements in a vehicle longitudinal direction, and left and right movements laterally to the vehicle longitudinal direction of the fork protector (20), and sub-guides (17f) adapted to restrict inward movements laterally to the vehicle longitudinal direction and rearward movements in the vehicle longitudinal direction of the fork protector (20).

5. Motorcycle according to one of the claims 1 to 4, wherein the fork protector (20) is formed from a resin.

6. Motorcycle according to one of claims 1 to 5, wherein a radiator (12) of the motorcycle is positioned behind rear surfaces of the inner tubes (10).

7. Motorcycle according to one of claims 1 to 6, wherein the motorcycle is an off road type motorcycle.

## Patentansprüche

1. Motorrad, aufweisend:
ein vorderes Schutzblech (15), konfiguriert, das Vorderrad (9) des Motorrades (1) abzudecken, wobei das vordere Schutzblech (15) aufweist ein Vorderseiten-Schutzblech (16), konfiguriert, eine Vorderseite des Vorderrades (9) des Motorrades (1) abzudecken, und ein Rückseiten- Schutzblech (17), konfiguriert, eine Rückseite des Vorderrades (9) abzudecken, wobei das Rückseiten- Schutzblech (17) in einer Position niedriger als die des Vorderseiten- Schutzbleches (16) montiert ist, und eine Vordergabel (8), wobei die Vordergabel (8) aufweist Außenrohre (11), die die das Vorderrad (9) halten, und Innenrohre (10), aufgenommen in den Außenrohren (11), und wobei das Vorderseiten- Schutzblech (16) an den Innenrohren (10) montiert ist, und das Rückseiten- Schutzblech (17) an den Außenrohren (11) montiert ist, **gekennzeichnet, durch**
einen Gabelschutz (20), konfiguriert, eine vordere Oberfläche der Vordergabel (8) abzudecken und eine hintere Oberfläche der Vordergabel (8) freizulassen, wobei der vordere Gabelschutz (20) konfiguriert ist, eine vordere Oberfläche der Innenrohre (10) abzudecken,
wobei das Vorderseiten- Schutzblech (16) an dem Gabelschutz (20) befestigt ist und wobei der Gabelschutz (20) gleitbar mit dem Rückseiten- Schutzblech (17) in Eingriff ist.

2. Motorrad nach Anspruch 1, wobei ein Bereich der Vordergabel (8), abgedeckt durch den Gabelschutz (20), und ein Bereich der Vordergabel (8), abgedeckt durch das Rückseiten- Schutzblech (17), einander überlappen, wenn von seitlich des Motorrades (1) gesehen.

3. Motorrad nach Anspruch 1 oder 2, wobei das Rückseiten- Schutzblech (17) mit Schutzführungen (17a, 17f) versehen ist, die mit einem Teil des Gabelschutzes (20) zum Eingriff kommen.

4. Motorrad nach Anspruch 3, wobei die Schutzführungen Hauptführungen (17e) aufweisen, vorgesehen, Längsbewegungen zur Längsrichtung des Fahrzeuges und Links- und Rechts- Bewegungen seitlich in der Längsrichtung des Gabelschutzes (20) zu begrenzen, und Unterführungen (17f), vorgesehen, Einwärts- Bewegungen seitlich zu der Längsrichtung des Fahrzeuges und Rückwärts- Bewegungen in der Längsrichtung des Fahrzeuges des Gabelschutzes (20) zu begrenzen.

5. Motorrad nach einem der Ansprüche 1 bis 4, wobei der vordere Gabelschutz (20) aus einem Kunststoff gebildet ist.

6. Motorrad nach einem der Ansprüche 1 bis 5, wobei ein Kühler (12) des Motorrades hinter hinteren Oberflächen der Innenrohre (10) positioniert ist.

7. Motorrad nach einem der Ansprüche 1 bis 6, wobei das Motorrad ein Motorrad vom Gelände- Typ ist.

## Revendications

1. Motocycle comprenant :
un garde-boue (15) conçu pour recouvrir une roue avant (9) du motocycle (1), le garde-boue avant (15) comprenant un garde-boue côté avant (16) conçu pour recouvrir un côté avant de la roue avant (9) du motocycle (1), et un garde-boue côté arrière (17) conçu pour recouvrir un côté arrière de la roue avant (9), le garde-boue côté arrière (17) étant monté dans une position plus basse que celle du garde-boue côté avant (16), et
une fourche avant (8), ladite fourche (8) comprenant des tubes externes (11) supportant la roue avant (9), et des tubes internes (10) logés dans les tubes externes (11), le garde-boue côté avant (16) étant monté sur les tubes internes (10), et le garde-boue côté arrière (17) étant monté sur les tubes externes (11),
**caractérisé par**
un dispositif de protection de fourche (20) conçu pour recouvrir une surface avant de la fourche avant (8) et pour exposer une surface arrière de la fourche avant (8), le dispositif de protection de fourche (20) étant conçu pour recouvrir une surface avant des tubes internes (10),
dans lequel le garde-boue côté avant (16) est fixé sur le dispositif de protection de fourche (20), et
dans lequel le dispositif de protection de fourche (20) s'engage de manière coulissante avec le garde-boue côté arrière (17).

2. Motocycle conformément à la revendication 1, dans lequel une région de la fourche avant (8) recouverte par le dispositif de protection de fourche (20) et une région de la fourche avant (8) recouverte par le garde-boue côté arrière (17) se chevauchent mutuellement lorsque le motocycle (1) est vu latéralement.

3. Motocycle conformément à la revendication 1 ou 2, dans lequel le garde-boue côté arrière (17) est doté d'éléments de guidage de protection (17e, 17f) s'engageant avec une partie du dispositif de protection de fourche (20).

4. Motocycle conformément à la revendication 3, dans lequel les éléments de guidage de protection comprennent des éléments de guidage principaux (17e) conçus pour empêcher des mouvements longitudinaux dans une direction longitudinale du véhicule, et des mouvements vers la gauche et vers la droite latéralement à la direction longitudinale du véhicule du dispositif de protection de fourche (20), et des éléments de guidage secondaires (17f) conçus pour empêcher des mouvements vers l'intérieur latéralement à la direction longitudinale du véhicule et des mouvements vers l'arrière dans la direction longitudinale du véhicule du dispositif de protection de fourche (20).

5. Motocycle conformément à l'une des revendications 1 à 4, dans lequel le dispositif de protection de fourche (20) est constitué d'une résine.

6. Motocycle conformément à l'une des revendications 1 à 5, dans lequel un radiateur (12) du motocycle est positionné derrière des surfaces arrière des tubes internes (10).

7. Motocycle conformément à l'une des revendications 1 à 6, dans lequel le motocycle est un motocycle de type tout terrain.
